# EUROPEAN PATENT APPLICATION

(11) **EP 1 624 398 A1**
(43) Date of publication of application: **08.02.2006**
(21) Application number: 04718974.1
(22) Date of filing: 10.03.2004
(51) Int. Cl.: G06F 19/00, G06F 3/033, H04L 12/12, H04L 29/00, H04L 12/28

(54) **INTERACTIVE SYSTEM AND METHOD FOR CONTROLLING HOUSEHOLD APPLIANCES**

(30) Priority: 10.03.2003 WO PCT/ES03/00103
(71) Applicant: Eneo Laboratories, S.A., 08005 Barcelona (ES)
(72) Inventor: DOMENECH RIERA, Eudald, E-08005 Barcelona (ES); LECUMBERRI IRIARTE, David, E-08005 Barcelona (ES); ZAMORA LOPEZ, Javier, E-08005 Barcelona (ES)
(74) Representative: Gallego Jiménez, José Fernando
(86) International application number: PCT/ES2004/000109
(87) International publication number: WO 2004/084114

(57) **Abstract**

Interactive system to control home devices (6; 18) connected to a control unit (3) by first connection means (4), client devices (8; 11) that can comprise telephone sets (8) connected to the control unit (3) by second connection means (5), whereon a user (8a; 11a) interacts. The control unit comprises a transfer protocol server (B2) which establishes contact with a human-machine interface, and transfers it to the client device, and system logging means (B5). The human-machine interface is associated to the first home device and to the user (8a; 11a), and the control unit also comprises user administration means (B3), means (B6) for controlling the session established by the user, means (B8) for storing data relating to the first home device, data including the human-machine interface associated thereto and to the user, and abstraction means (B10, B11) of the first home device.

## Description

The present invention relates to a process and interactive system to control at least one home device connected to a control unit by first connection means, at least one client device connected to the control unit by second connection means, whereon a user interacts, whose control unit comprises a transfer protocol server which establishes contact by at least one human-machine interface, and transfers it to the client device after interaction between the user and the human-machine interface, and system logging means.

It also relates to a process for controlling at least one home device connected to a control unit by first connecting means, which control unit has also connected at least one client device by second connecting means.

### Background of the invention

The progressive and massive connection of homes to Internet is favouring the appearance of an emerging market based on the commercialization of new advanced services for so-called "digital homes".

The development of said services requires an integrated solution for the different home services found in the home such as home automation, audiovisual, communications, data or security.

Currently, each one of said services is articulated so that the manufacturing of the device hardware, the device control software, the applications, and the sales, are generally performed by the same company, offering proprietary system based solutions.

Although said structure has functioned for specialized systems in a very specific service, independent from the other systems, it is a barrier to the development of new advanced home services, since the interaction and integration of the different systems is necessary.

Furthermore, the home systems (home automation, audiovisual, security, biometric control, or digital voice and data) use specialized networks independent from one another. Said situation means the appearance of new advanced services is very expensive, due to the lack of flexibility in the architecture of said networks for intercommunication.

The convergence underway in the last few years between the computer industry and telecommunications industry and, they recently, in turn, with the audiovisual content management and broadcasting industry, makes a change in the existing structure necessary. Said change is analogous to that which occurred in the 80s with the transition of mainframes to personal computers. Before the appearance of the personal computer, the hardware, the software to control said hardware, the applications, the sales and the maintenance of the mainframes was structured as the home systems are now. The appearance of the personal computer meant a clear separation between hardware, which can be commercialized by a plurality of manufacturers, and the applications run on said hardware, which, in turn, can be commercialized by infinity of companies. Said separation between hardware and software was possible due to the appearance of a middleware or operating system which abstracts the physical resources of the hardware in objects which can be programmed by the applications. By changing their structuring, the personal computer revolution meant an exponential increase in the computer industry, product of the competitiveness and the interoperability of the systems.

Due to all of this, the vision of the digital home should be based on creating an open, programmable network which permits developing, integrating and operating advanced services in an easy, useful manner and at a low cost. Thus, there should be a logical separation between the home devices or home systems (e.g., air conditioning, alarm, telephone, light switches, etc.) and the control of said devices. It is clear that the functionality combinations that a user may want to give the home devices are infinite, for which reason it is necessary to create a common control platform which permits the programming and integration of said devices.

With the intention of following said orientation, various implementations of control systems, structured as previously disclosed, have appeared amongst which stand out those of Samsung Electronics Co., Ltd. reflected in their international patents WO 98/59282 and WO 98/59283.

The patent WO 98/59282 relates to a "Browser based command and control home network". Said patent discloses a process and a system to command and control several home devices. A first home device capable of displaying user interface data is connected to a home network. A second home device stores user interface data that defines a user interface, to command and control the second home device, also connected to the home network. The first device receives the user interface data from the second device through the network. Next, the first device displays the user interface as is defined by the data. The user interacts with the user interface displayed on the first device using a control device. The control and command information is sent from the first home device to the second, with the intention of controlling the second device according to the information entered by the user. Since the user interface can be viewed from any device, a single control device can control a plurality of different devices, without the need to make any changes in the mode of functioning of the control device.

The patent WO 98/59283 relates to an "Improved home network, browser based, command and control". Said patent discloses a process to command and control diverse home devices in a home network. According to the process, a client device is connected to a home network and can display a user interface. Software is run on the client device to cause said user interface to be displayed on said client device. First and second devices, connected to the home network, are selected from the user interface, and that sends them command and control data from the client device to make the devices intercommunicate, with the intention of performing a service.

As is clearly gathered from said documents, the disclosed systems, amongst other things, cannot undergo modifications of a configurative character, neither in themselves nor on the devices that comprise them, since at no time do said systems know who or what is interacting with them. Said characteristic is an important drawback as it converts the systems in totally static, non-versatile systems.

Furthermore, said fact that the systems do not know who is acting on them, causes the appearance of serious security problems, especially when they are connected to Internet, as well as a limitation in the systems' capacities, as they are preventing, even though it is desired, access to any current or future service provider, not now due to security reasons, but due to problems evident in their conception, especially on a structural level.

On the other hand, the above documents indicate that the user interface of any system device is stored in the device, which means the devices should store information on the format of the interfaces and therefore, said devices should implement a protocol for the transmission of said interfaces. This means that the possible modification of any parameter of said interface is very costly, and that the degree of abstraction of the devices is considerably reduced.

### Description of the invention

The present invention solves all the aforementioned drawbacks, further providing new technical characteristics that will be disclosed hereunder.

According to one aspect of the invention, the interactive control system is characterized in that the human-machine interface is connected to the home device and to the user; and in that the control unit also comprises a user administrator, a session control means established by the user, a home database for data relating to the home device that includes the human-machine interface connected thereto and to the user, and home device abstraction agent.

In this way, it is possible to create an open, programmable system that permits developing, integrating and operating advanced services in a useful, easy manner and at a low cost.

First, the user administrator means allows the system registering an unlimited number of users, assigning a predetermined or specific user profile to each one within the system. Each user can have different options assigned for each device, for which reason the human-machine interface of the device that will be displayed to perform the control or programming thereof, will be totally dynamic, as it will only display those variables on which the user in question can act. Likewise, each user configures the system in his/her own way, as, e.g. he/she can indicate that when he/she is validated all or certain house lights will be switched on. All of these is possible due to the existence of user policy means intended to discriminate the functionalities available to each user in the system, the technical characteristics being evidently impossible in a system wherein user administration is not performed.

Furthermore, all the characteristics of the human-machine interfaces for each device are stored in the home database of the control unit, i.e. they are stored outside the home devices, for which reason the devices do not need to store information on the format of these interfaces, nor implement the protocols necessary for their transmission. Both characteristics contribute to greater modularity and portability when changing and/or personalizing the interfaces in question, achieving, in this way, a higher degree of system device abstraction.

The presence of said user administrator means also considerably increases the control system security, since each user should be validated therein with, e.g. a username and a password.

The fact that the data of each home device are associated with each home device and the users thereof also involves system dynamism as well as an increased security since it permits that only certain users can generate certain events on the first home device. A clear example may be based upon the different events that a boy or an adult can generate on the first home device, being evident that an adult must be enabled to carry out more or different events on the first home device (for example , a home alarm) than the boy can do.

The presence of a session control means is necessary, amongst other things, to create persistence in the sessions opened by the users, for those transfer protocols that require them. Thus, said session control means converts a series of independent transactions in a continuous state, with the intention of creating the perception of a single user session, delimited by login and logout to the system.

The home device abstraction means are necessary to control said home devices, virtualizing each element that comprises them and meaning that the users that monitor the devices do not require to have their physical information, or to know the low-level protocols through which said devices are controlled. On the other hand, there should be a device controller for each control technology, which will be that which performs the translation of logical actions (e.g. switching on a light), into physical actions specific to the control technology.

With this, the fact of abstracting the home devices permits any application to access the control and/or manipulation of said devices for their inclusion in the programming of scenes or macros i.e. successive pre-programmed actions according to events.

The logging means comprise logs of incidences occurred in the system and user logs. Logs of incidences are logs in which incidences occurred in the system that are necessary for effectively detecting possible errors therein are detailed. User logs are logs in which all the operations generated by users connected to the system, as well as the devices monitored by said users are detailed.

The transfer protocol server is necessary for receiving the events generated by the user through the client device, processing and sending them to the abstraction means for running them on the first home device. Furthermore, said transfer server is necessary for validating the users in the system and for obtaining the possible events to be carried out on said first home device, to which the user us authorized.

The transfer protocol server may comprise a logical tree block, at least a block for generating the data associated with the first home device and with the user from the logical tree block; and at least a protocol transfer block for transferring the data of the first home device generated by the block, to the second home device.

Said described configuration permits the communication of the current state of the first home device in the client device and the communications of the answer of the first home device after its manipulation may be carried out in multiple ways, providing the system a higher degree of versatility. Thus, for example, if the client device has a display screen, the generation block is able to generate a html page, which will be transmitted by the protocol transfer block by means of a http protocol server. In this case, the logical tree block is based on a xml file having the abstract description of the data of each home device (it is a list of devices), the data generation block is a xsl file acting as a template for obtaining a html file, that is, the combination of a xml file and a xsl file gives rise to a html file. The protocol transfer block, which in the present example uses the http protocol, is the logic that permits a browser to communicate with a web server and that encapsulates the html file transfer.

In a further possible embodiment, the client device could be a telephone. For this, the current state of the first home device or the answer after its manipulation could be communicated to the user by means of a voice menu so that the user is allowed to cause an event on said first home device by acting on the telephone alphanumeric keyboard.

Preferably, the control unit may also comprise a service directory available to the user in accordance with the user administrator.

Said directory of the available services stores all the services assigned to each one of the users who are registered with the system, so that when a user is validated, the system automatically knows which services the user should have access to.

Also preferably, the control unit comprises update means which maintain synchronization between the real state and the state saved in the home database of the home device.

The presence of said update agents permits knowing at all times the state of each one of the home devices that form the system. Furthermore, they inform all the users connected to the system of any possible modifications in the state of any home device. If there are devices in the system that do not have the capacity to generate events, the conversion of a poll system is performed from the update agents, i.e. obtaining the state of the device by an explicit question mark, an event driven (the users that monitor the device are informed in real time only when events occur).

Preferably, the home device abstraction agents comprise managers thereof, to control it and virtualize it, and home device controllers, which translate the logical actions into physical actions thereon.

In this way, the users who monitor devices do not need to have physical information available on them or know the low-level protocols through which the devices are controlled. Furthermore, they permit the use of different control technologies, for which reason there is a large quantity of device types that can be controlled.

It is also worthy of note, as mentioned above, that the abstraction of said home devices permits any application to access the control and/or manipulation of said devices for their inclusion in the programming of scenes or macros.

The human-machine interface is a page made in a Markup language and, more specifically, in HTML, while the transfer protocol server is a HTTP server.

The fact of using HTTP protocol and pages in HTML permits to obtain, amongst other things, greater facility of design and integrating the system in data networks, e.g. IP-based networks, such as Internet. Said integration is fundamental to be able to remotely control the system's home devices, without having to make any large investments or the user having to transport any device to connect the system since it is practically possible to connect to Internet from wherever the user is.

Advantageously, the first connection means, between the control unit and the first home device may comprise a native IP interface, and more particularly a standard Ethernet with comprises, from a logical point of view, a transport network and a control network.

The fact of using a native IP interface considerably facilitates communication between the different home devices that form part of the system, as well as communication between said home devices and the control unit. It is only necessary to assign an IP number (Internet Protocol) to each device to univocally identify each device in the system. Said IP assignation can be static, i.e. each device has a predetermined IP address or dynamic, through a DHCP server.

In the event that said native IP interface is a standard Ethernet interface its transport network may be used, for example, to send streams of audiovisual content with specific bandwidth and service quality requirements, whilst the control network serves to read and configure and the state of each one of the connected home devices.

It is also possible that the first connection means between the control unit and the home device comprise an interface selected from an IEEE 802.11, a RS-232, a USB or a FireWire.

This configuration is only possible in the case that some of the home devices cannot work in an IP interface environment, being necessary to use of some of the mentioned protocols. A further possible scenario can arise in which some of the home devices is not able to use any of the known protocols for connection to the control unit, so it is necessary to create a physical and logical interface for the device that is suited specifically to the home device characteristics and allows it to dialogue with the control unit. It could be said that the connection of all the home devices to one another gives rise to a home network, known as HAN (Home Area Network).

The second connection means, between the control unit and the client device, is a native IP interface, whose physical transport media are based on wideband access technology from the system to data networks, such as Internet, and whose logical media are API based. Said physical means may be, among others, ADSL, cable, or PLC, whilst the logical means are mainly based on open technologies, such as OSGi, XML, or web services.

According to a preferred embodiment of the invention, the second connection means and the first connection means can be the same communication interface.

It is thus established that the second communication means are the HAN itself, obtaining a control system allowing control of the first home device as the user interacts with a second home device of the HAN, which acts like a client device. Therefore, it is possible to control a device of the home network from other device of the same network. The fact that the control of a home device is carried out from other home device of the same system (the same HAN) involves higher system independence relative to external factors thereto, for example, an Internet access. Any home device may be controlled by another home device, whenever the user is authorised for it.

Said physical media can be, amongst others, ADSL, cable or PLC, whilst the logical media are principally open technology, such as OSGi, XML or WebServices.

According to a characteristic of the invention, the user is a vehicle control system.

The vehicle control system is disclosed in a patent application of the same holder and filed on the same date as the present one. It discloses a vehicle control system which comprises a control unit connected to at least one device by first connection means, and by at least one client device connected to a control unit by second connection means, whereon a user interacts. The control unit comprises a transfer protocol server which transfers at least one human-machine interface, connected to the device and to the user, to the client device, a logging service, a user administrator, a session control means established by the user, a home database relating to the device that includes the human-machine interface connected to the device and to the user, and device abstraction agents.

In this way, one can create an open, programmable vehicle control system which allows developing, integrating and operating advanced services in an easy useful manner and at a low cost. Furthermore, it provides the vehicle's total connectivity, as well as ubiquitous, secure, access which is simple and personalized.

To the vehicle, the home appears as just another device, which can be controlled from the vehicle, in an analogous manner to what occurs with a CD or MP3 player located in the vehicle. A specific example of this situation would be downloading music files in MP3 format from the home to the vehicle.

In this situation, we should distinguish two possible scenarios.

A first scenario appears when the vehicle is close to home, e.g. in the garage. In this case the vehicle forms part of the home network and the contents between the home and the vehicle are synchronized.

A second scenario appears when the vehicle is at a distance from the home. In this case, the home is connected to the vehicle, but with less bandwidth than that used in the first scenario, and with the special characteristic that it is connected through public networks, with the consequent security risk, which leads to the use of communications encryption mechanisms, such as TLS, SSH or SSL.

On the other hand, the user can also be a service provider.

For this, the service provider only has to be registered as a system user. Once identified, it normally runs an application, which is what permits providing value added services in the home. Said applications can be generated by demand or by the service providers, using open protocols.

This characteristic permits opening the home to the outside world, which means an important advance in the field we are concerned with, since it is possible to have total remote control of the home, either by the home user or by the service providers, who can, e.g. detect a fault in any device, detect the presence of intruders, detect a fire, know which food the home user needs to purchase, or perform a medical examination. Furthermore, using the system of the invention, it is possible to contract or cancel any existing service, without it costing anything in infrastructural terms.

On the other hand, the user can also be an application responsible for maintaining system integrity, and the connectivity and maintenance of the control unit.

As is evident, there can also exist applications of the home user that allow him/her to remotely access the monitoring, control and state of his/her home.

According to another characteristic of the invention, the home device is a vehicle control system.

In this case, the home appears as just another user of the control system of a vehicle, which means being able to access any resource or application available in the vehicle from the home, such as, e.g. downloading, in the home, a file wherein the state of each one of the vehicle devices is detailed to detect possible anomalies therein.

In this situation, two possible scenarios can be differentiated.

A first scenario appears when the vehicle is close to the home, e.g. in the garage. In this case the vehicle forms part of the control system and the contents between the home and the vehicle are synchronized.

A second scenario appears when the vehicle is at a distance from the home. In this case, the home is connected to the vehicle, but with less bandwidth than that used in the first scenario, and with the special characteristic that it is connected through public networks, with the consequent security risk, which leads to the use of communications encryption mechanism, such as TLS, SSH or SSL, as previously mentioned.

Alternatively, the home device can also be an independent subsystem.

Said subsystem can be, for example, a home automation subsystem, which means that the user, whether he/she is a home user or a service or maintenance provider, directly acts on the home subsystem.

On the other hand, the home device can also be an element of an independent subsystem.

If we consider that the independent subsystem is again a home automation subsystem, said element can be, for example, a light. Thus, the user acts directly on the light and not on the home automation subsystem which controls it, since the light is considered a home device.

Basically, the means for storage of data relative to the home device are a database of the parameters of the configuration and the current state of the home device.

According to another embodiment of the invention, the client device may comprise a telephony apparatus. Said situation will arise mainly when the client device is a second home device of the network (HAN).

Interaction between the user and the telephony apparatus for generating an event on other home device of the system may be done, for example, through the keyboard of the telephony apparatus or through a voice menu. In the case said telephony apparatus is provided with a display screen, such as a LCD screen, the user can receive the confirmation of his/her validation in the system, the confirmation that the event has been run on the home device to be controlled, or receive warnings about state changes of any of the home devices. In the case that the telephony apparatus is not provided with said screen, the user may receive the warnings by means of sound signals, such as voice messages. As described above, any event generated by the user through the telephony apparatus which, in turn, may be a home device, for actuating on other home device of the system, is controlled and processed by the protocol transfer server.

According to still a further preferred embodiment of the invention, the control unit may comprise a voice over internet (VoIP) technology processing and control module (BVIP).

Provision of a VoIP processing and control module, also referred to as IP telephony, in the system, involves the possibility of transmitting voice through networks using an IP interface, in the form of data packets, as in the case of system according to the invention. Ordinary telephone calls are thus made possible over IP networks or other packet networks from the system, using a personal computer, gateways and standard telephones. In general, apart from telephone calls, any communication service such as voice, fax or voice message applications transported via IP networks, usually Internet, are possible.

For this purpose, the VolP processing and control module has to convert the analog voice signal into a digital format and compress the digital signal into internet protocol (IP) for transmission. In reception, the reverse process is carried out for retrieving the analog voice signal back again. When making a telephone call over IP through a home device of the system, the voice is digitalized, compressed and sent in IP data packets. These packets are sent through the wide band internet connection to the person desired to talk to. When their destination is reached, packets are again assembled, decompress, and converted into the original voice signal.

Provision of VoIP technology in the control system of the invention thus provides a number of advantages, among which saving in the home telephony costs and providing an acceptable communication quality are emphasized.

Saving in telephony costs is due basically to the fact that a normal telephony call requires a huge telephone switchboard network mutually connected through optical fiber and telecommunications satellites, in addition to the cables linking the telephones to the switchboards. The high investments required for creating and maintaining this infrastructure affect both the cost of the calls and the cost of the maintenance or renting of the telephone lines. Furthermore, when a normal telephone call is established, a dedicated circuit is used, with an excess of capacity which in reality is not used.

On the contrary, when a telephone call according to VoIP technology is established, a compression of the voice signal is carried out and a packet network is used only as necessary. Data packet of different calls and even of different types of data can pass through the same line at the same time. Furthermore, Internet access is increasingly cheap, even free, so that one has to pay the call according to cheapest local rates.

As the telephony apparatus is another home device in the system, it has to be connected to the first connection means which, as stated above, may be a native IP interface, and more particularly a standard Ethernet interface. It is understood that a WiFi (IEEE 802.11.x) is an Ethernet interface since the WiFi access point is interconnected through Ethernet. Furthermore the connection of said apparatuses to the interface is completely essential so that VoIP technology integrated in the system can be used. Thus, the telephony apparatus may be an IP telephone a conventional telephone connected to the IP interface through an adaptor to Ethernet, a USB over IP telephone, or a WiFi telephone.

The incorporation of the VoIP processing and control module in the system provides a number of functionalities related to telephony, some of them are cited below:
- manage making and receiving external telephone calls to the system in the telephony apparatus connected to the HAN;
- associate a number of identifiers (DDIs) with the internet wide band access as personal numbers to be assigned to system users;
- manage internal calls between different telephony apparatuses connected to the system HAN;
- manage the calls between different telephony apparatuses present in different home device control systems;
- manage independent voice mail boxes of the identifiers assigned to system users;
- block incoming and outgoing calls according to predefined parameters;
- selecting, for the outgoing calls, the telephony operator according to preset parameters;
- notify the user the missing calls, as well as the existence of any message in the assigned voice mail box; and/or
- forwarding calls from one identifier to another telephone number;
- integration of the voice communications with the rest of the technologies connected at home (e.g. home systems, security, audiovisual, etc.)

According to another aspect of the invention, the process to control at least one home device is characterized in that it comprises the following steps:
(A) A user is identified through the client device by identification data;
(B) The transfer protocol server sends the user identification data to the session control means to start a session and save the user validation in logging service means of the system;
(C) The current state of the first home device is requested to data storage means, which current state is sent to the transfer protocol server;
(D) The transfer protocol server notifies the user said current state, through the client device, by a human-machine interface;
(E) The user generates a home device manipulation event, interacting with the human-machine interface displayed on the client device, whose event is sent to the transfer protocol server;
(F) Said transfer protocol server sends the home device manipulation event generated by the user, to the session control means, which commands the generation of the event in the logging service to be saved;
(G) The event is sent to the home device through abstraction means of said home device, to attain the manipulation thereof;
(H) The information of the current state of the home device is updated in the data storage means; and
(I) The home device response is sent to the session control means, which, in turn, logs the response in the logging system, whose session control means sends the home device response to the transfer protocol server, and
(J) The transfer protocol server communicates this response, through the client device, to the user, by the human-machine interface.

The user identification step (A) may comprise the following substeps:
(A.1) The user sends a service request from the client device to a transfer protocol server;
(A.2) The transfer protocol server requests the user identification in the client device;
(A.3) The user sends the identification data, through the transfer protocol server, to user administrator means for their validation, whose user administrator means sends the result of said validation to the transfer protocol server.

The process according to the invention may also comprise the following steps between steps (B) and (C):
(K) The session control means requests, to user policy means, permissions assigned to said validated user which are sent to the session control means; and
(L) The session control means interrogates service storage means to obtain the services available to the user.

Preferably the step (D) may comprise the following substeps:
(D.1) The actual state of the first home device is loaded into a logical tree block;
(D.2) At least one data generating block generates the data associated with the first home device and the user from the logical tree block in a format suitable to the client device;
(D.3) Said data associated with the first home device are transferred to the client device through at least a transfer protocol block by using a transfer protocol suitable to the format of the data; and
(D.4) Data are communicated to the user through the client device.

Furthermore, the process may also comprise a step (M), between steps (F) and (G) wherein the home device manipulation event is sent to update means.

The process may comprise a step (N), between steps (G) and (H), wherein the home device responds to update means, through abstraction means.

In the case the user validation in the user administrator means in substep (A.3) is not correct, the control returns to the substep (A.2).

According to a further aspect, the present invention refers to a computer program which comprises code means adapted for carrying out all of the described steps when said program runs in the control unit.

Said computer program may be stored in accessible means readable by the control unit; said control unit may be a computer.

### Brief description of the drawings

For a better understanding of all that described, drawings are attached, wherein, schematically, and as a non-restrictive example, a practical embodiment is represented.

In the drawings:
Figure 1 is a general block diagram of the interactive system to control home devices, object of the invention;
Figure 2 is a general diagram of the control interactive system of the invention.
Figure 3 is a diagram of the architecture of the control unit of the system of figure 1;
Figure 4 is a functional block diagram of the system in figure 1;
Figure 5 is a functional block diagram which shows a first example of interaction between the blocks that form the system represented in figure 4;
Figure 6 is a functional block diagram that shows a second example of interaction between the blocks that form the system of figure 4;
Figure 7 is a functional block diagram which shows a third example of interaction between the blocks that form the system of figure 4;
Figure 8 is a functional block diagram which shows a fourth example of interaction between the blocks that form the system of figure 4;
Figure 9 is a functional block diagram which shows a fifth example of interaction between the blocks that form the system of figure 4;
Figure 10 is a functional block diagram which shows a sixth example of interaction between the blocks that form the system of figure 4;
Figure 11 is a block diagram of the transfer protocol server comprised in the system control unit in figure 1;
Figure 12 is a schematic drawing of the implementation of a possible example of the system of the invention; and
Figure 13 is a schematic drawing of a possible human-machine interface.

### Description of preferred embodiments

A description of a preferred embodiment will be made below wherein the transfer protocol server is a HTTP server, the data network, and more specifically the IP-based network, is Internet, whilst the human-machine interface is a page in HTML.

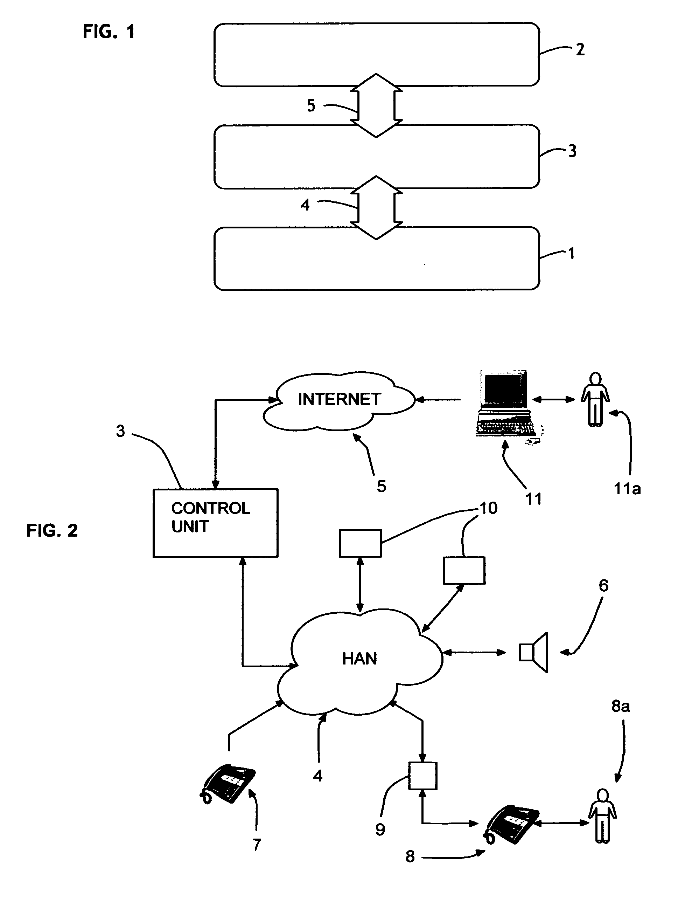

As can be seen in figure 1, the interactive system to control home devices, object of the invention, has three-layer architecture. A first layer formed by a series of home devices 1 which aim to be controlled by a second layer of applications 2 (developed by one or several service providers), through a resource abstraction layer 3, which permits the applications operating with device abstractions, without needing to know the physical and technological data of said home devices 1.

Basically, said structure is comparable with the architecture of a personal computer, wherein there are a series of hardware devices (memory, graphic cards, network cards, hard disks, etc.) which are used by several applications (communications, office automation, etc.) through an operating system that provides an abstraction of the devices to the applications.

The system also has a connectivity network 4 between the resource abstraction layer 3 and the home devices 1, and a connectivity network 5 between the applications 2 and the resources abstraction layer 3.

Within the home devices layer 1, we can include any device that can be controlled and/or programmed by the resources abstraction layer 3 of the devices 1. The home device concept covers both independent subsystems (e.g. a home automation system), and any of the dependent elements of those subsystems (e.g. a light controlled by said home automation system). Thus, when the present description refers to the control of a home device 1, it is understood that concerns the possibility of monitoring and/or changing the state of each one of the dependent elements commanded by a subsystem, whilst if it relates to the programming of a device 1, it is understood that it refers to modifying and/or determining the programming of the subsystem as a whole.

### Examples of subsystems are:

- Home automation control panels.
- Alarm systems.
- Access control systems
- Audiovisual systems.

Examples of elements commanded by subsystems are:
- Lights controlled by home automation control
- Proximity card readers
- Technical alarm detectors.
- State of multimedia display screens.

Applications layer 2, developed by one or several service providers, includes those providers of applications and services offered on the home abstraction provided by layer 3, also called control unit. Thus, the control unit 3 can be defined as a residential gateway, whose objective is to facilitate the provision of advanced services based on connectivity within the home. These applications or services 2 can be divided in several categories, according to their principal end user (home occupants vs. service provider control centre) and the purpose said application or service has (support, display, etc.). With this, it can be determined that there exist control applications (or services), responsible for system integrity, value added services in the home, and user applications or services, that provide a service to the home user, permitting remote access to the monitoring, control, programming and state of the home.

The control unit 3 is formed by an array of applications and device controllers that provide the abstraction of the home devices 1 to the applications 2. The objective of said control unit 3 is to eliminate the specific properties of each home device 1, to offer the applications 2 an abstract display of each of said devices 1, only represented by their generic properties (localization, function, etc.), states and associated actions, avoiding the applications 2 needing to know the specific details of each type of device 1.

As an example of that described in the previous paragraph, we can quote the case of two lights controlled by two different home automation systems, so that control unit 3 will present two identical devices 1 to the applications 2, eliminating, in this way, the need for the application to know the details of each home automation system.

The fact that the home devices can be abstracted, means any application can access the control and/or manipulation of said devices for its inclusion in the programming of scenes or macros, i.e. successive pre-programmed actions according to events.

The connectivity network 4 permits intercommunication between the control unit 3 and the home devices 1. Said connectivity depends on the capacity of the devices 1 to offer a native IP interface (standard Ethernet interface). In those cases where the interface does not fulfil the described characteristics, it is necessary to obtain a physical and logical interface for each device 1 that allows them to communicate with the control unit 3.

The connectivity network 5 permits intercommunication between the control unit 3 and the applications or services 2. In this case, the interface will be native IP. The physical means of transport is determined by the wideband technology (ADSL, cable, etc.) of each system, object of the invention, and the logical interfaces are performed by known APls, using open technologies (OSGi, XML, etc.).

As shown in figure 2, the control system comprises a plurality of home devices 1 mutually connected through the Ethernet interface, forming a home network or HAN (Home Area Network). Amongst the mutually connected home devices, it is to be highlighted a HiFi device 6, an IP telephone 7, a telephone 8 with capability for displaying html pages on which a first user 8a acts, said telephone being connected to the HAN 4 through an adapter to Ethernet 9, and other home devices 10, such as a television sets, home automation systems, or lighting systems. The control system also comprises the control unit 3 to which the HAN 4 is connected, and the computer 11 (client device) that is connected to the control unit 3 through the wide band internet access 5 and on which a second user 11a acts, for performing the remote control of the HiFi device 6.

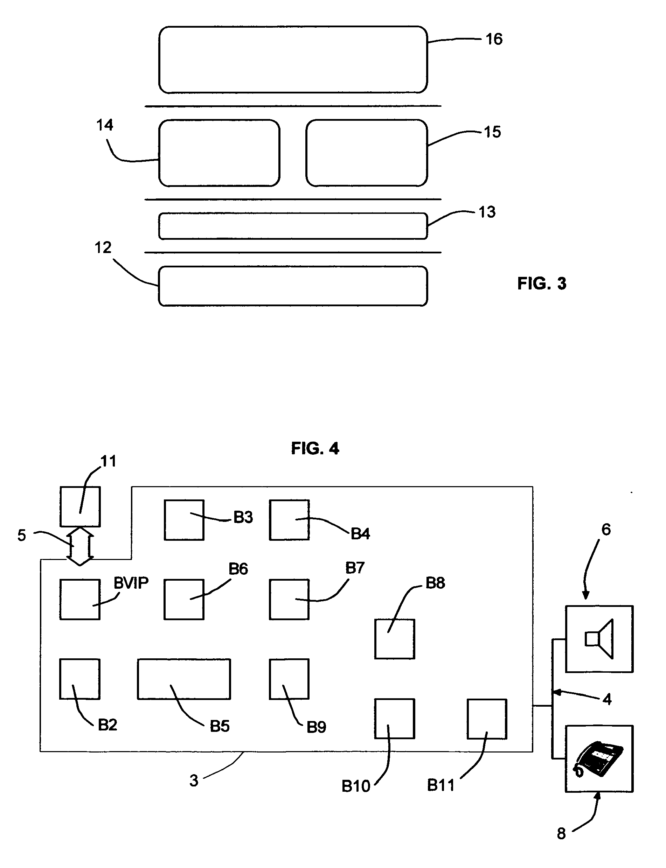

From figure 3, one can see that, architecturally, the control unit 3 comprises a module 12 of controllers of the connected home devices 1; an operating system 13 which virtualizes all the system hardware resources; a system software module 14, which includes the system services that are not usually provided by the operating system 13; a control unit 3 software module 15 that fundamentally permits providing advanced system services; applications software module 16, which can be defined based on the disclosed architecture.

The module 12 of controllers of the home devices 1 is the part closest to the hardware and its main function is controlling the physical "protocols" of communication between the control unit 3 and the home devices 1. Within said protocols we should highlight Ethernet, USB, RS-232 or Wi-FI.

The system software module 14, as previously mentioned, includes those system services that the operating system 13 does not usually provide, but that, due to their nature, form part of the basic connectivity services. Among them we should highlight the Firewalls, responsible for the system security, the HTTP servers or DHCP servers.

The control unit 3 software module 15 relates to two open development standards.

The first standard is OSGi, which defines a framework which permits the creation of services that can be remotely installed and maintained, and that can be developed in accordance with the architecture defined by OSGi. Said framework is run on a Java Virtual Machine, which means that any development in OSGi can be run on any platform.

The second standard is .NET, which defines a communications architecture between systems connected by open technologies such as XML or SOAP. Furthermore, it is the basis for the WebServices advocated by Microsoft.

The applications software module 16 is the one which permits logical communication with other systems such as X-10, home automation or UPnP (Universal Plug & Play) control modules.

In figure 4 we can see the block diagram of the system in which the blocks forming the control unit 3 are shown. A computer 11 is connected to said control unit 3 through the wide band internet access 5, and the HAN formed by the home devices 1, such as the telephone 8 and the HiFi device 6, through the Ethernet interface 4. The user 11a interacts with the computer 11 through a web browser according to http standards.

The control unit 3 comprises a transfer protocol (http protocol) server block B2 that is the single interface point between the users 8a, 11a and the rest of the system; a user administrator block B3, which performs the functions of authentication, authorization and accounting of the users 8a, 11a; a user policy block B4, which is complemented with block B3 and has the purpose of discriminating the available functionalities for each user 8a, 11a; a logging service block B5, which logs the operations and events which occur in the system, in an event log and user log. The event log details messages from the different parts of the system, which subsequently serve to diagnose possible problems, whilst all those operations performed by the user or by the controlled parts of the system are saved in the user log. So as to avoid unnecessary logs, it should be determined which actions should generate information and which not.

Referring to the user administrator block B3, authentication relates to the process of univocally identifying the users 8a, 11a in the system, the more usual method being that of using user name and password, although more sophisticated method exist; authorization relates to the process of verifying which functions the authenticated user has access to, the more usual being carrying out this process by means of user profiles and file systems, and accounting relates to the process whereby logs of actions for each user are established, with the purpose of, e.g. determining possible security violations, establishing a detailed invoicing or diagnosing system problems.

The control unit 3 also comprises a session control means block B6 (session manager), which, amongst other things, and for the transfer protocols that require it, create persistence in user sessions, converting a series of independent transactions (e.g. clicks during a session) into a continuous state to create the perception of a single user session, starting the user sessions and maintaining a state table of all sessions in progress, with the aid of the user administrator block B3; a service directory block B7 which, once the session has started, presents the services available to the user 8a, 11a in accordance with the policies that have been previously defined in user administrator block B3; a data storage block B8 (home database), such as a database which stores the configuration of the different home devices 1 existing in the home, as well as its current state; an update block B9 (update agent), which maintains the synchronization between the real state of the home devices 1 and the state logged by the system in the block B8, and communicates it to all those users that are monitoring said state at that time, a device manager block B10, wherefrom the different devices 1 of the HAN are controlled and each device is virtualized, so that the users 8a, 11a that monitor said home devices 1 do not need to have their physical information, nor to know the low-level protocols whereby said devices are controlled; and a device controller block B11, which is what performs the conversion of logical actions (e.g. switching on a light) into physical actions specific to the control technology, there being a device controller for each control technology; and a voice over IP BVIP block which manages the voice over IP technology (VoIP or IP telephony) present in the system.

From said VoIP BVIP block it is possible to use the system according to the invention like a home switchboard (home PBX), which involves a significant saving in the home telephony bill.

The main feature provided by said BVIP block is the possibility of receiving and making calls from the system, using for this purpose the VoIP technology, which provides a number of features entailing considerably enhancing the functionality of the system.

The home telephones 7, 8 can be connected to the control unit 3 through the HAN 4, or through the adapter 9 which converts the analog signal (RJ-11 connector) into VoIP signal (HAN RJ-11 connector). It is also possible to use an adapter that converts the analog signal (RJ-11 connector) into VoIP signal (USB connector in the control unit 3), or the existence of IP telephones for direct connection to the home network (HAN).

Depending on the home telephone line, it is possible to associate it with identification numbers (DDIs) as personal numbers for assign them to the users 8a, 11a of the system. For example, a user may have a number assigned for private calls, and a number assigned for professional calls, the incoming calls being managed for these two numbers, with different rules. Thus, the professional calls, for example, may be automatically redirected to a voice mail box from a given time.

A further functionality provided by the VolP BVIP block is the possibility of making internal calls between different telephones 7, 8 of the system itself, connected to the HAN.

It is also possible to provide the identifiers (DDIs) with a determined number of independent voice mail boxes, which can be assigned depending upon the caller-ID of the calling person and/or the DDI used when said characteristic is supported by the external telephone line. The management of the voice mail boxes may be carried out by a voice menu from the telephone 7, 8 by means of an option menu visible on a LCD screen that may be carried by the telephone, or through a human-machine interface, for example in a html page format, shown by the transfer protocol server B2 of the control unit 3. Said mail boxes may reside, for example, in the data storage block B8, the size of each of the mail boxes and the number of mail boxes being completely configurable.

On the other hand, the VolP BVIP block can permit displaying the state of the control unit 3 in, for example, a web interface in a html page format. Furthermore, it is possible to display the state of the control unit 3 on any other home device that comprises a screen, for example, a television set, which is provided with a browser capability.

The VoIP BVIP block can also filter the callings of the system, blocking the incoming calls from undesired numbers, and certain types of outgoing calls.

Another characteristic provided by the VoIP BVIP block is based on the possibility of establishing VoIP callings from different control systems according to the invention, which involves being able to make telephone conversations with no cost. For this purpose, each system user has a "telephone number" assigned for making direct callings between the systems. Furthermore, any user can establish conference calls with a determined number of users of different systems according to the invention (e.g. four users talking to each other from four different homes using the system of the invention).

For those users who authorize it, their "telephone number" may appear on a shared directory (e.g. on a html page) for being able to be consulted by other users of other systems according to the invention.

Another functionality of the system provided by the presence of the VolP BVIP block is the virtual operator, which involves a significant saving in the home telephony bill. The operator acts as follows: depending on the outgoing or incoming call:
- Outgoing callings:
   For the outgoing callings, the system choose the telephone company depending on certain predetermined criteria, which purpose is to maximize saving and to provide an acceptable quality of service, being able of using VolP when the quality of the communication is not critical. Said service requires the user is registered in each of the telephone companies to be chosen.
- Incoming callings:
   This functionality permits modifying the user through, for example, SMS messages and/or email, missing calls in the VolP BVIP block as well as new messages in the voice mail boxes. For telephonic systems with more than one line, it is possible to preset forwarding to other telephone numbers or forwarding through VolP to other control systems such as that of the invention.

From the device control system described, here follows a description of several examples of interaction between the blocks forming said system, for carrying out the control of a first home device (the HiFi device 6) from a client device (computer 11) arranged external to the home network HAN.

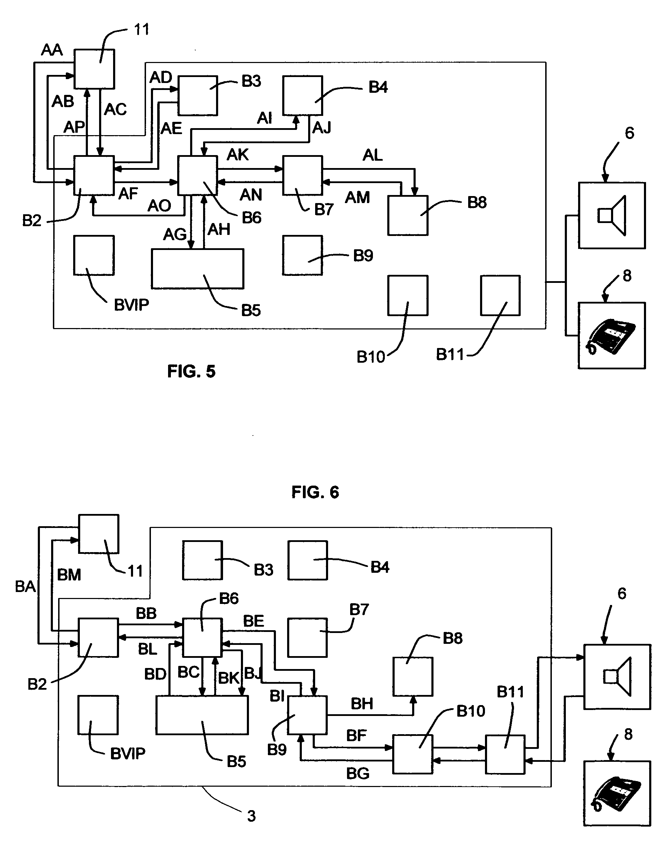

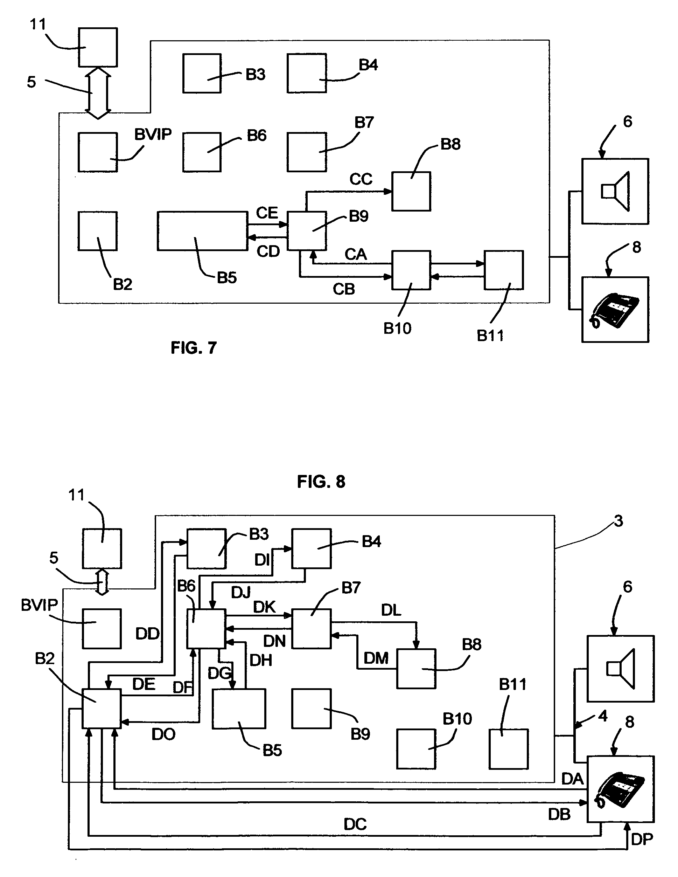

Figure 5 shows a first example of interaction between the disclosed devices, which form the control unit 3. Said example relates to the initialization and identification of a user 11a in the system. In said figure, it can be observed that the process is initialized when a user 11a acts on the computer 11 (client block), so that said computer 11 requests AA a service to the HTTP server block B2. Block B2 responds by presenting AB a login (user and password) page. After the user 2 entering AC his/her credentials, the user administrator block B3 checks AD that they are correct. Both if they are correct and if they are not, block B3 responds AE to block B2. If said block B2 receives a negative response, it again presents AB the login page to the user. In the case of affirmative response, a new session is established AF, for which the session control means block B6 saves AG, AH a log in the logging service block, and requests AI, AJ user policy block B4 for the permits assigned to the user 11a. Subsequently, block B6 interrogates AK the service directory block B7 on the services available for the user 11a, and obtains AL, AM a current representation of the system state, from home database block B8. Finally, the information is presented AN, AO, AP to the user by a page in HTML page (figure 8) through block B1.

In figure 6 we can see a block diagram that shows a second example of interaction between the blocks that form the control unit 3, wherein a manipulation of a home device 1 (HiFi device) is performed. For this, it is understood that that the initialization and identification process disclosed for figure 5 has been correctly finalized.

In this case, the computer 11 has access to the generation BA of a home device 1 manipulation event through the page in HTML, which reaches BB the session control block B6, which saves BC, BD a log of the request of the event in the logging service block B5. Said request passes BE to update agent block B9, which crosses BF to the HiFi device 6 after its manipulation, through device management block B10 and device controller B11. Block B9 receives BG the response from the home device 1 after its manipulation, and updates BH block B8 and returns BI to block B6, which, after saving BJ, BK another result log in the logging service block B5, communicates BL, BM the result to the user 11a, by the page in HTML, through the computer 11.

Figure 7 represents a third example of interaction between the blocks which constitute the control unit 3, wherein a synchronization of the state of the home devices 1 is performed, among which the HiFi device 6 is. As can be easily be deduced from the figure, the synchronization processes can be independent of the existence of users 11 which are monitoring the state of the home devices 1.

Update agent block B9 interrogates CA the home devices 1 which cannot generate events through the home network. Any home device that undergoes a change of state informs CB said block B9, either actively, or after receiving a state request. Block B9 then updates CC the home database block B8, and saves CD, CE an event log in the logging service block B5.

Here follows a description of several examples of interaction between the blocks forming said system, for carrying out the control of a first home device (the HiFi device 6) from a second home device (telephone 8), which forms part of the same home network HAN. The telephones present in the home network 4 also permits to make the best use of all the telephony functionalities provided by the already described voice over IP BVIP block.

In figure 8, it can be seen one example in which the validation of the user 8a in the system is carried out, for subsequently controlling a home device, the HiFi device 6, from another home device, the telephone 8, present in the same home network HAN 4. Said example refers to the initialization and identification of the user 8a in the system.

In said figure, it can be seen that the process is initialized when the user 8a acts on the telephone 8 with browser capability, connected to the control unit 3 through the adapter to Ethernet 9. Said telephone 8 discriminates between the sending/receiving VoIP calls, through the BVIP block, the control of another home device of the HAN 4, and its own control, generated by another home device through the Ethernet interface, or remotely by the personal computer 11, through the Internet.

In the present example, the telephone 8, by means of the interaction with the user 8a, requests DA a service to transfer protocol server block B2, which subsequently requests DB the identification parameters of the user 8a through a html page displays on the screen of the telephone 8, and sends them DC to block B2. When parameters are received by the block B2, they are sent DD to the user administration block B3, which checks whether they are correct. Both if they are correct or not, the block B3 sends DE the result to the block B2. In the case the block B2 receives a negative response, it requests the user again DB the identification parameters. If response is affirmative, the block B2 sends DF the identification parameters of the user 8a to the session control block 6, for initiating a session. Then, the block B6 stores DG, DH the user's validation 8a in the system log block B5, and asks DI, DJ the user policy block B4 the permissions assigned to the user 8a. Subsequently, the block B2 interrogates DK the service storage block B7 about services available to user 8a, and obtains DL, DM the actual state of the HiFi device 6 of the data storage block B8. Finally, the information is communicated DN, DO, DP to the user 8a, by means of a html page displayed on the screen in the telephone 8.

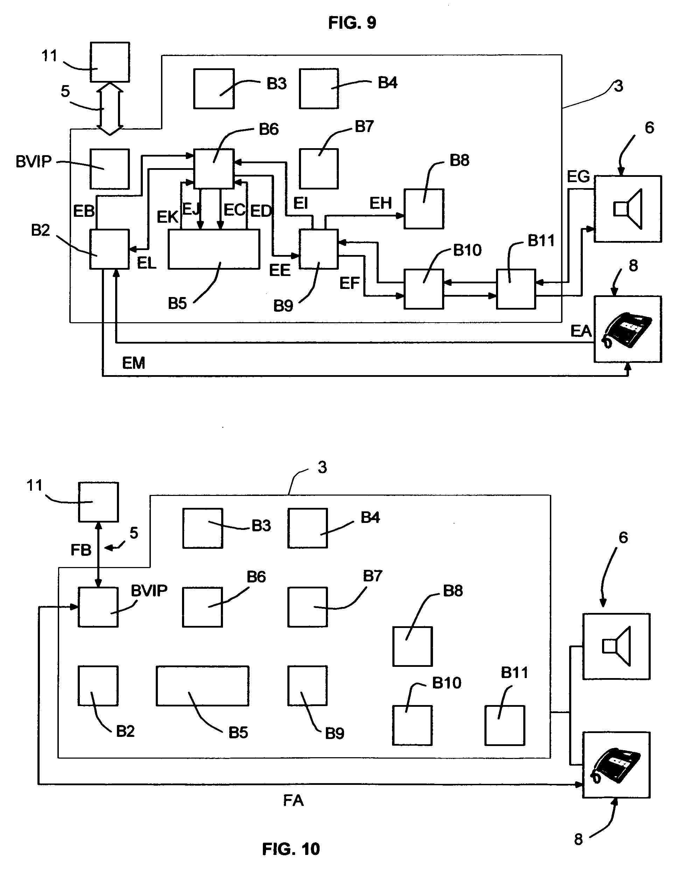

In the figure 9 a block diagram can be seen showing a further example of interaction between the blocks forming the system, in which operation of the HiFi device 6 is carried out (first home device). For this purpose, it is to be understood that the initialization and identification described in figure 8 has finished correctly.

In said example, the user 8a, on interacting with the telephone 8, has access for generating an event for handling the HiFi device 6, by acting on the html page displayed through the screen in said telephone 8, reaching EA the transfer server block B2, which sends BB said handling event to session control block B6. Then, the block B6 stores EC, ED a log of the request of the event in the system log block B5. Said request is passed EE to the update block B9, which transfers EF it to the HiFi device 6 for its handling, through the device manager block B10 and the device controller block B11. Said handling event may be, for example, cause the HiFi device 6 to switch off. Then, the HiFi device 6 responds EG to the update block B9 indicating that it is switched off, and the information about the current state of the HiFi device 6 is updated EG (state = switched off) in the data storage block B8. Subsequently, the response of the HiFi device 6 is sent EI to the session control block B6, and the response is logged EJ, EK in the system log block B5. The control means send EL the response of the HiFi device 6 to the transfer server block B2, which displays EM said response to the user 8a by means of a new html page through the screen in the telephone 8.

In the figure 10 a block diagram of the system according to the invention can be seen in which the interaction between the blocks for making and receiving telephone calls according to the voice over IP (VoIP) technology is shown. The interaction between blocks shown serves for all the possibilities offered by the VoIP telephony in the system (call blocking, call forwarding, calls between telephone of the same system, calls between telephones of different systems, etc.) Communication is only required through HAN 4 of the home telephones 7, 8 with the VolP BVIP block present in the control unit 3, as well as the connection to Internet of said BVIP block by means of the wide band connection 5.

In order the user 8a is able to make a call through the telephone 8, he/she only has to dial the telephone number desired to contact to. In this way, a connection FA is established between the telephone 8 and the BVIP block, which converts the analog voice signal into a digital format and compresses the digital signal in an Internet Protocol (IP), that is, IP data packets are generated to be transmitted FB. Said transmission is carried out through Internet 5. When the packets reach their destination, they are assembled again, decompressed and converted into the original voice signal.

In the case the communication is required to be performed between different telephones 7, 8 of the HAN 4, the BVIP block only has to direct the voice signal of one of the telephones 7; 8 to another of the telephones 7; 8.

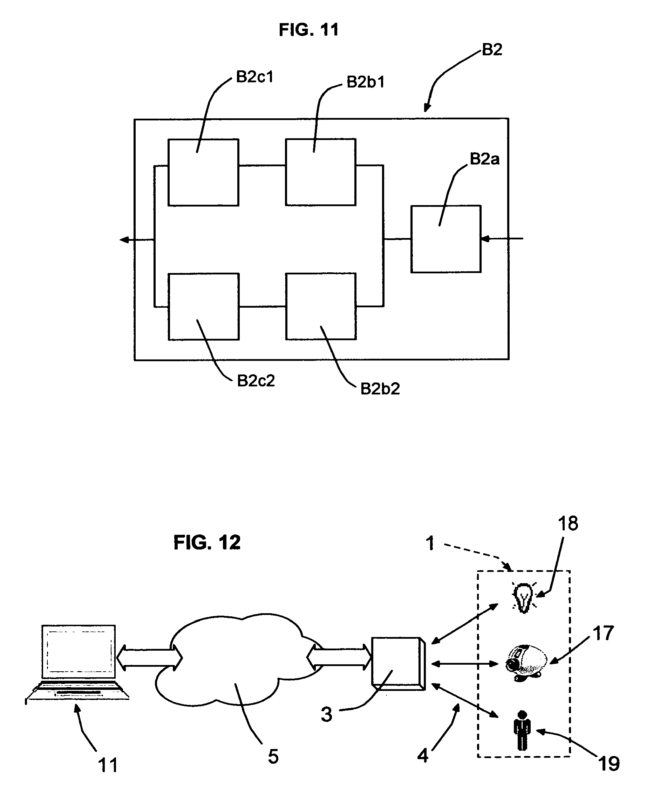

In the figure 11a block diagram of the transfer server block B2 is shown. As described heretofore, the transfer server block basically receives user data and distributes them for certain blocks forming the control unit 3, and sends data to the users about the home device state on which they desire to act. For this purpose, the transfer server B2 comprises a logical tree block B2a comprising an abstract description of the data of the home device forming part of the system; a first block B2b1 for generating data associated with one of the devices and the user 8a; 11a who pretends acting on said device; a first protocol transfer block B2c1, for transferring the data obtained in the block B2b1 to the user 8a; 11a; a second block B2b2 for generating data associated with another of the devices and the user 8a; 11a; and a second protocol transfer block B2c2 for transferring the data obtained in the block B2b2 to the user 8a; 11a. As is apparent for those skilled in the art, said configuration is merely by way of a non-limiting example. The number of data generating blocks and the number of protocol transfer blocks may be varied according to the system configuration. Each device may need a data generating block different from the rest of the devices and therefore different transfer protocols for transferring said data. Thus, for example, in the case described heretofore wherein a telephone 8 is used for acting on the HiFi device 6, since the telephone needs to receive data in html format to be displayed in its display screen, the data associated with the telephone and the user will have to be in html format and therefore the transfer protocol will be http.

Whatever the case is, the logical tree block B2a has a list of the system devices wherein their characteristics are included. According to one example, the logical tree may be fully described with the following xml file:

Said html file will be transferred to the telephone by using a http protocol in the block B2c1.

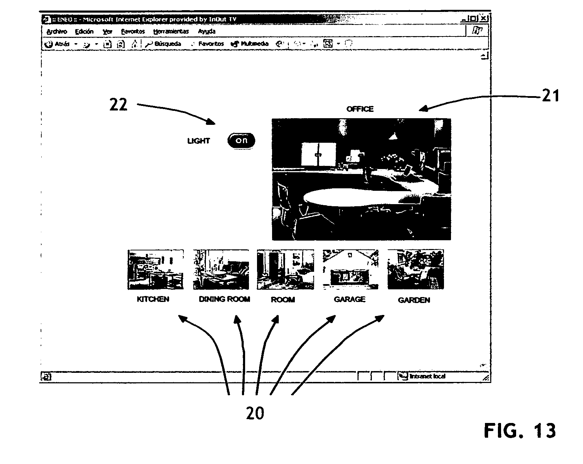

A specific embodiment of the invention will be disclosed referring to figures 12 and 13. In said description, the devices 1 are interconnected by a standard Ethernet network 4, which, in turn, is connected to the control unit 3. It is presumed that the home devices 1 are a plurality of webcams 17, a plurality of lights 18 and a plurality of presence sensing devices 19 arranged throughout the home. The user 11a is a security provider in the home, which controls the possible intrusion of any strangers therein. Furthermore, the page in HTML 14 (figure 13) is displayed on the screen of a laptop 11 located in the security provider offices. The connection 5 of the control unit 3 to the laptop 11 is performed through Internet 15 by a 256 kbps download and 128 kps upload ADSL line, whilst the laptop 11 of the security provider, uses a cable Internet connection.

Firstly, to be able to offer the service, the security provider should be registered as a system user 11a. It is presumed that this is already the case. From hereon, a security provider employee tries to connect to the system using a laptop 11. For this, he/she sends AA a service request to the transfer protocol server B2 through Internet 5, which shows AB, through Internet 5, an identification page in HTML, on the laptop screen 11. The employee sends AC the data to the transfer protocol server B2, which sends AD them to the user administrator block B3, for its validation. Said block B3 returns AE an affirmative response to the server B2, achieving a correct validation from the provider.

Subsequently, the server B2 sends AF the provider identification data to the session control block B6, to start a session and save AG, AH the provider validation in the logging service block B5. Once this action has been performed, the session control block B6 sends Al the provider data to the user policy block B4 to obtain AJ the permits assigned to said provider. Then, the session control block B6 interrogates AK the service storage block B7 to obtain the services available for the provider. In this case, the provider has access to the lights 18, the webcams 17 and the presence sensing devices 19.

At the same time, the service storage block B7 interrogates AL the data storage block B8 to obtain AM the current state of the devices 1 which can be controlled by the provider. Said state is sent AN, AO to the server B2 so that it is displayed AP through the HTML page of figure 13. In said figure, it can be seen that the screen of the laptop 11 displays the images 20 of all the webcams 17 arranged in the home. In addition, the enlarged image 21 of the selected camera 17 can be seen. Furthermore, together with the selected image 21, the light controls 22 of said place in the home appear, to be able to switch them on and turn them off as desired. As soon as the presence sensing devices 19 detect any change, the image 20 of the part of the home wherein said sensing device is found begins to flash to alert the provider. Said alert can also be accompanied by a sound. By way of example, it is presumed that the sensing device is found in the office and that it is necessary to switch on the lights 18 to be able to see its inside more clearly.

For this, the security provider employee clicks on button 22 of the light 18, to switch it on. A manipulation event of said light 18 is generated internally, which is sent BA to the transfer protocol server B2. Subsequently, said server B2 sends BB the event to the session control block B6, which generates BC, BD the event log in the logging system block B5. Furthermore, block B6 sends BE the event to update agent block B9, which makes it reach BF the lights 18 though device management block B10 and device controller block B11 and switches them on.

Once switched on, the lights send BG, through blocks B10 and B11, an acknowledgement to update agent block B9. Said block B9 updates BH the state of the lights in the home database block B8, and sends BI the response to the session control block B6, which logs BJ, BK the response in the logging service block B5. Then, block B6 sends BL the response to the server B2, which modifies BM the page in HTML in figure 13, changing the light switch 22 from ON to OFF. Furthermore, the employee can see in the image 21 produced with the webcam 17, how the lights 18 have been switched on and the possible presence of an intruder.

Despite the fact that a particular embodiment of the present invention has been disclosed and represented, it is evident that someone skilled in the art can introduce variants and modifications, or substitute the details for other technically equivalent ones, without moving away from the scope of protection defined by the attached claims.

For example, the user validation in the system can be done in various ways. The existing possibilities are varied, being able, for example, to identify the user from his/her voice, fingerprints, iris or from a transponder that stores any user identification data.

On the other hand, the control of a home device may be carried out by any other home device, so long as it has any type of interface between the device and the user. It is clear that a device can both control another device and another device can control it.

The way of communicating the user the state of the first home device on which he/she wants to act depends on the second home device that it is being used therefore, and the user. Thus, it is possible to use a voice menu system, or a LCD screen displayed menu system in the telephone 8 in the case the telephone does not have any browser capability. For this purpose, the format of the data generated by the block B2b1; B2b2 should be a special type, and the protocol used by the block B2c1; B2c2 should be brought into line with the format of the data generated by the block B2b1; B2b2.

## Claims

**1.** Interactive system to control at least one home device (6; 18) connected to a control unit (3) through first connection means (4), at least one client device (8; 11) connected to a control unit (3) through second connection means (5), whereon a user (8a, 11a) interacts, whose control unit comprises a transfer protocol server (B2) which establishes contact with at least one human-machine interface and transfers it to the client device (8; 11) after the interaction between the user (8a; 11a) and the client device, and system logging means (B5), **characterized in that** the human-machine interface is associated with the first home device (6; 18) and the user (8a; 11a); and **in that** the control unit (3) also comprises user administrator means (B3), means (B6) for controlling the session established by the user, data storage means (B8) relating to the home device including the human-machine interface associated therewith and to the user, and abstraction means (B10, B11) of the first home device.

**2.** Control system according to claim 1, **characterized in that** the transfer protocol server (B2) comprises a logical tree block (B2a), at least one block (B2b1; B2b2) for generating the human-machine interface associated with the home device (6; 18) and the user (8a; 11a) from the logical tree block (B2a); and at least one protocol transfer block (B2c1; B2c2) for transferring the data from the first home device generated by the block (B2b), to the client device (8; 11).

**3.** Control system according to any of the claims 1 or 2, **characterized in that** the control unit (3) comprises means (B7) for storing services available for the user (8a; 11a) depending on the user administrator means (B3).

**4.** Control system according to any of the claims 1 to 3, **characterized in that** the control unit (3) comprises updating means (B9) for maintaining the synchronization between the actual state and the state stored in the data storage means (B8) of the first home device (6; 18).

**5.** Control system according to any of the claims 1 to 4, **characterized in that** the abstraction means of the first home device (6; 18) comprises means (B10) for managing, controlling and virtualizing it, and means (B11) controlling the first home device, which perform the translation of logical actions into physical actions thereon.

**6.** Control system according to any of the claims 1 to 5, **characterized in that** the human-machine interface is a page made in a markup language.

**7.** Control system according to claim 6, **characterized in that** the page made in a markup language is a page in HTML.

**8.** Control system according to any of the claims 2 to 7, **characterized in that** the transfer protocol block is a HTTP server (B2c1; B2c2).

**9.** Control system according to any of the claims 1 to 8, **characterized in that** the first connection means comprise a native IP interface (4).

**10.** Control system according to claim 9, **characterized in that** the native IP interface is a standard Ethernet interface (4) which comprises, from a logical point of view, a transport network and a control network.

**11.** Control system according to any of the claims 1 to 8, **characterized in that** the first connection means comprise an interface (4) selected from an IEEE 802.11.x, a RS-232, a USB, a FireWire, or a WiFi.

**12.** Control system according to any of the claims 1 to 8, **characterized in that** the first connection means (4) are specifically adapted to the characteristics of the home device.

**13.** Control system according to any of the claims 1 to 12, **characterized in that** the second connection means are a native IP interface (5), whose physical transport media are based on wideband access technology of the system to a data network, more specifically an IP protocol-based network, and whose logical media are API based.

**14.** Control system according to claim 13, **characterized in that** the data network, more specifically the IP protocol-based network, is Internet.

**15.** Control system according to any of the claims 1 to 12, **characterized in that** the second connection means (5) and the first connection means (4) are the same communications interface.

**16.** Control system according to any of the claims 1 to 15, **characterized in that** the client device comprises a second home device (8).

**17.** Control system according to any of the claims 1 to 16, **characterized in that** the user is a vehicle control system (11a).

**18.** Control system according to any of the claims 1 to 16, **characterized in that** the user is a service provider (11a).

**19.** Control system according to any of the claims 1 to 16, **characterized in that** the user is an application (11a) responsible for maintaining system integrity, and the connectivity and maintenance of the control unit (3).

**20.** Control system according to any of the claims 1 to 19, **characterized in that** the first home device is a vehicle control system (6; 18).

**21.** Control system according to any of the claims 1 to 19, **characterized in that** the first home device is an independent subsystem (6; 18).

**22.** Control system according to any of the claims 1 to 19, **characterized in that** the first home device is an element (6; 18) of an independent subsystem.

**20.** Control system according to any of the claims 1 to 22, **characterized in that** the user administrator means (B3) comprise user policy means (B4).

**24.** Control system according to any of the claims 1 to 23, **characterized in that** the system logging means (B5) comprise system event logs, and user logs.

**25.** Control system according to any of the claims 1 to 24, **characterized in that** the data storage means (B8) relating to the home device (1) are a database of the configuration parameter and the current state of the home device.

**26.** Control system according to any of the claims 1 to 25, **characterized in that** the control unit (3) also comprises an operating system (13), which virtualizes all the system hardware resources, a firewall to protect the system, a DHCP server for the automatic assignation of an IP address to the home device (1), and a database engine (B8).

**27.** Control system according to any of the claims 1 to 26, **characterized in that** the client device comprises a telephone device (8).

**28.** Control system according to any of the claims 1 to 27, **characterized in that** the control unit (3) comprises a module (BVIP) for processing and controlling the voice over IP (VolP) technology.

**29.** Control system according to claim 28, **characterized in that** the module (BVIP) for processing and controlling the VoIP comprises management means for making and receiving telephone calls on the telephone device (8).

**30.** Control system according to any of the claims 28 or 29, **characterized in that** the module (BVIP) for processing and controlling the VolP comprises means for associating a number of identifiers (DDIs) to the second connection means (5) as personal numbers for assigning the users (8a; 11a) of the system.

**31.** Control system according to any of the claims 28 to 30, **characterized in that** the module (BVIP) for processing and controlling the VolP comprises means for managing the internal telephone calls between different telephone devices (7, 8) present in the system.

**32.** Control system according to any of the claims 28 to 31, **characterized in that** the module (BVIP) for processing and controlling the VolP comprises means for managing the callings between different telephone devices (B1) present in the different interactive home device control systems.

**33.** Control system according to any of the claims 28 to 32, **characterized in that** the module (BVIP) for processing and controlling the VoIP comprises means for managing voice mail boxes independent to the identifiers assigned to the users (8a, 11a) of the system.

**34.** Control system according to any of the claims 28 to 33, **characterized in that** the module (BVIP) for processing and controlling the VolP comprises means for blocking incoming and outgoing calls according to predetermined parameters.

**35.** Control system according to any of the claims 28 to 34, **characterized in that** the module (BVIP) for processing and controlling the VolP comprises selecting means, for the outgoing calls, of the appropriate telephony operator according to preset parameters.

**36.** Control system according to any of the claims 28 to 35, **characterized in that** the module (BVIP) for processing and controlling the VoIP comprises means for notifying the user the missing calls, as well as the existence of messages in the assigned voice mail box.

**37.** Control system according to any of the claims 28 to 36, **characterized in that** the module (BVIP) for processing and controlling the VoIP comprises means for forwarding calls from one identifier to another telephone number.

**38.** Method for controlling at least a first home device (6; 18) connected to a control unit (3) by first connection means (4), whose control unit (3) also has at least one client device (8; 11) through second connection means (5), **characterized in that** it comprises the following steps:
(A) A user (8a; 11a) is identified through the client device (8; 11) by identification data;
(B) The transfer protocol server (B2) sends (AF) the user identification data of the user to the session control means to start a session and save (AG, AH) the user validation in the system logging means (B5);
(C) The current state of the first home device (6; 18) is requested (AL) to data storage means (B8), whose current state is sent (AM, AN, AO) to the transfer protocol server (B2);
(D) The transfer protocol server (B2) communicates (AP) said state to the user (8a; 11a), through the client device (B1), by a human-machine interface;
(E) The user generates a first home device manipulation event, interacting with the human-machine interface displayed on the client device (8; 11), whose event is sent (BA) to the transfer protocol server (B2);
(F) Said transfer protocol server sends (BB) the first home device (6; 18) manipulation event generated by the user, to the session control means (B6), which commands (BC, BD) the generation of the event in the logging service (B5) to be saved;
(G) The event is sent (BF) to the first home device through abstraction means (B10, B11) of said first home device, to attain the manipulation thereof;
(H) The information of the current state of the home device is updated (BH) in the data storage means (B8); and
(I) The first home device response is sent (BI) to the session control means (B6), which, in turn, logs (BJ, BK) the response in the system logging service (B5), whose session control means sends (BL) the first home device response to the transfer protocol server (B2); and
(J) The transfer protocol server displays (BM) said response, through the client device (8; 11) to the user (8a; 11a) using the human-machine interface.

**39.** Process according to claim 38, **characterized in that** the user identification step (A) comprises the following substeps:
(A.1) The user (8a; 11a) sends (AA) a service request from the client device (8; 11) to a transfer protocol server (B2);
(A.2) The transfer protocol server (B2) requests (AB) user identification in the client device;
(A.3) The user sends (AC, AD) the identification data, through the transfer protocol server (B2), to the user administrator means (B3) for their validation, whose user administrator means sends (AE) the result of said validation to the transfer protocol server.

**40.** Process according to any of the claims 38 or 39, **characterized in that** it also comprises the following steps between steps (B) and (C):
(K) The session control means (B6) requests (Al) the permissions assigned to said validated user (8a; 11a) to user policy means (B4) which are sent (AJ) to the session control means (B6); and
(L) The session control means interrogates (AK) service storage means (B7) to obtain the services available to the user.

**41.** Process according to any of claims 38 to 40, **characterized in that** the step (D) may comprise the following substeps:
(D.1) The actual state of the first home device (6; 18) is loaded into a logical tree block (B2a);
(D.2) At least one data generating block (B2b1; B2b2) generates the data associated with the first home device and the user (8a; 11a) from the logical tree block (B2a) in a format suitable to the client device (B1);
(D.3) Said data associated with the first home device are transferred to the client device (8; 11) through at least a transfer protocol block (B2c1; B2c2) by using a transfer protocol suitable to the format of the data; and
(D.4) Data are communicated to the user (8a; 11a) through the client device.

**42.** Process according to any of claims 38 to 41, **characterized in that** it also comprises a step (M), between steps (F) and (G) wherein the first home device manipulation event is sent (BE) to update means (B9)

**43.** Process according to any of claims 38 to 42, **characterized in that** it also comprises a step (N), between steps (G) and (H), wherein the first home device (1) responds (BG) to the update means (B9), through the abstraction means (B10, B11).

**44.** Process according to any of claims 38 to 43, **characterized in that** if the validation of the user (8a; 11a) in the user administrator means (B3) in substep (A.3) is not correct, the control returns to substep (A.2).

**45.** Process according to any of claims 38 to 44, **characterized in that** the second connection means (5) and the first connection means (4) are the same communications interface.

**46.** Process according to any of claims 38 to 45, **characterized in that** the client device comprises a second home device (8).

**47.** Process according to claim 46, **characterized in that** the second domestic device comprises a telephone device (8).

**48.** Computer program which comprises code means adapted for carrying out all of the steps in claim 28 when said program runs in the control unit (3).

**49.** Computer program according to claim 48, **characterized in that** it is stored in accessible means readable by the control unit (3).

**50.** Computer program according to any of claims 48 or 49, **characterized in that** said control unit comprises a computer (3).
